# EUROPEAN PATENT SPECIFICATION

(11) **EP 1 917 170 B1**
(45) Date of publication and mention of the grant of the patent: **07.04.2010**
(21) Application number: 06765161.2
(22) Date of filing: 31.07.2006
(51) Int. Cl.: B60T 17/22, F16D 65/74

(54) **BRAKE FLUID VALVE ASSEMBLY**
BREMSFLÜSSIGKEITSVENTILANORDNUNG
ENSEMBLE DE SOUPAPE DE LIQUIDE DE FREINAGE

(30) Priority: 29.07.2005 GB 0515617
(43) Date of publication of application: 07.05.2008
(73) Proprietor: Alcon Components Limited, Tamworth, Staffordshire B79 7TN (GB)
(72) Inventor: SMITH, Phillip, J., Sutton Coldfield, West Midlands B75 6DY (GB); MCKEON, Michael, Loughborough, Leicestershire LE11 1JE (GB)
(74) Representative: Croston, David
(86) International application number: PCT/GB2006/002846
(87) International publication number: WO 2007/012877

(56) References cited:
- JP-A- 59 126 128
- JP-A- 59 126 129
- US-A- 3 667 576

## Description

The present invention relates to a brake fluid valve assembly.

Brake 'knock-off' is a common problem in vehicles fitted with disc brakes that incorporate fixed opposed piston calipers and is described as follows.

Brake systems for high performance vehicles or racing cars are designed to include clearances to prevent off-brake drag and, under normal road use, the designated clearances are maintained. Due to the specified clearances, there is a small amount of dead pedal travel when the brake pedal is pressed before pressure starts to build as fluid is transferred from the master cylinder to the brake caliper. However, under hard use, such as on a racetrack, the wheel, hub and wheel bearing can deflect during cornering or when driving over rumble strips or kerbing. Since the caliper is rigidly mounted to the upright/knuckle, component deflection causes the disc to push the brake pad in the direction of the caliper pistons, displacing the pistons into the caliper bore and forcing an amount of fluid back to the master cylinder. When the brake pedal is re-applied, dead pedal travel is greater due to the increased volume of fluid required to be transferred from the master cylinder to the caliper to push the pistons forwards against the pads. In severe cases, the total available pedal travel is insufficient to push the pistons forwards and the pedal must be pumped. During this action, no brake pressure is generated and the vehicle does not decelerate, to which there can be serious safety repercussions.

One recognised solution to this problem is to fit a spring behind each piston to push the piston against the pad. However, the spring load required to prevent pistons being pushed into the caliper bore can lead to a force being applied to the pad, with the consequence that the brake is continually applied, which leads to overheating of the brake. The documents US 3 667 576 A, JP 59 126 128 A, JP 59 126 129 A describe different anti-drug valving for wear compensation in brake pistons.

An aim of the invention is to provide an alternative brake fluid valve assembly.

According to one aspect of the invention there is provided a brake fluid valve assembly comprising a first fluid flow path means and a second fluid flow path means, each fluid flow path means for allowing brake fluid to flow in a direction from a caliper towards a master cylinder, the second fluid flow path means defining a minimum cross sectional area which is smaller than the minimum cross sectional area of the first fluid flow path means, the assembly being configured so that when brake fluid pressure is above a predetermined value, fluid can pass along the first fluid flow path means, and when brake fluid pressure drops below the predetermined value, the first fluid flow path means is arranged to close and fluid can pass only along the second fluid flow path, so as to restrict the maximum possible flow rate of fluid in a direction from a caliper towards a master cylinder.

When the brake fluid pressure is above the predetermined value, the second fluid flow path means is preferably part of the first fluid flow path means.

The first fluid flow path means may comprise a plurality of paths for ducting fluid in parallel.

One path of the first fluid flow path means may have a different minimum cross sectional area from another path of the first fluid flow path means. One path of the first fluid flow path means may have the same minimum cross sectional area as another path of the first fluid flow path means. All of the paths of the first fluid flow path means may have the same minimum cross sectional area

At least one of the paths of the first fluid flow path may have a larger minimum cross sectional area than the minimum cross sectional area of the second fluid flow path. A plurality of the paths of the first fluid flow path may have a larger minimum cross sectional area than the minimum cross sectional area of the second fluid flow path. Each of the paths may have a larger minimum cross sectional area than the minimum cross sectional area of the second fluid flow path.

At least one of the paths may have a smaller minimum cross sectional area than the minimum cross sectional area of the second fluid flow path. A plurality of the paths may have a smaller minimum cross sectional area than the minimum cross sectional area of the second fluid flow path. Each of the paths may have a smaller minimum cross sectional area than the minimum cross sectional area of the second fluid flow path.

At least one of the paths may have the same minimum cross sectional area as the minimum cross sectional area of the second fluid flow path. A plurality of the paths may have the same minimum cross sectional area as the minimum cross sectional area of the second fluid flow path. Each of the paths may have the same minimum cross sectional area as the minimum cross sectional area of the second fluid flow path.

The second fluid flow path means may comprise a plurality of paths. Alternatively, the second fluid flow path means may comprise a single path.

The first fluid flow path means may be arranged so that, above the pre-determined pressure, at least part of the fluid flowing therethrough is unchoked. Below the pre-determined pressure, the second fluid flow path may be arranged so that at least part of the fluid flowing therethrough is choked.

Preferably, the assembly comprises a non-return valve which defines the first fluid flow path. The non-return valve may also define the second fluid flow path. Alternatively, the second fluid flow path having the second area is arranged to allow fluid to by-pass the non-return valve and therefore the first fluid flow path.

The first fluid flow path is preferably arranged to close when brake fluid pressure is between 0 and 6 bar. In one preferred embodiment, the first fluid flow path is arranged to close when brake fluid pressure drops below a pressure of about three bar. In another preferred embodiment, the first fluid flow path is arranged to close when brake fluid pressure drops below a pressure of about two bar.

The size of the minimum area of the second fluid flow path may be variable. In such a case, the second fluid flow path comprises a needle valve arranged to vary its size.

The second fluid flow path preferably comprises a restrictor port. However, the second fluid flow path may comprise a plurality of restrictor ports. Preferably, the first fluid flow path comprises a plurality of return ports. Preferably, at least one return port has a restrictor port associated with it. Alternatively, each return port has a restrictor port associated with it.

The assembly preferably comprises a second non-return valve for letting fluid flow from a master cylinder towards a caliper to apply a brake.

Preferably, the assembly comprises a housing defining an inner chamber, the first non-return valve and the second non-return valve being arranged in the chamber, the housing defining an inlet and an outlet.

Preferably, the assembly comprises at least one restrictor port arranged between the outlet and the second non-return valve.

Preferably, the assembly comprises a single restrictor port arranged between the outlet and the second non-return valve.

Preferably, the assembly comprises a return port arranged to allow fluid to flow from the outlet to the second non-return valve.

Preferably, the assembly comprises a plurality of return ports arranged to allow fluid to flow from the outlet to the first non-return valve.

Preferably, wherein the assembly comprises a plurality of feed ports arranged to allow fluid to flow from the inlet to the second non-return valve.

Preferably, the assembly comprises a restrictor port being arranged (circumferentially) between two feed ports.

The assembly may comprise a restrictor port arranged midway between two feed ports.

The brake fluid valve assembly may be enclosed in a capsule.

According to a second aspect of the invention there is provided a master cylinder comprising a brake fluid valve assembly according to the first aspect of the invention or any of the consistory clauses relating thereto.

According to a third aspect of the invention there is provided a brake caliper comprising a brake fluid valve assembly according to the first aspect of the invention or any of the consistory clauses relating thereto.

According to a fourth aspect of the invention there is provided a brake fluid control circuit comprising a brake fluid valve assembly according to the first aspect of the invention or any of the consistory clauses relating thereto.

According to a fifth aspect of the invention there is provided a vehicle comprising a brake fluid valve assembly, master cylinder, brake caliper or circuit according to the first aspect of the invention or any of the consistory clauses relating thereto, or the second, third or fourth aspect of the invention.

A brake fluid valve assembly in accordance with the invention will now be described, by way of example only, and with reference to the accompanying drawings, in which:
Figure 1 is a schematic representation, mainly in cross section, of part of a brake fluid circuit in accordance with a first embodiment of the invention,
Figure 2 is an expanded view, again in cross section, of a brake fluid valve assembly in the brake fluid circuit of Figure 1,
Figure 3 is the brake fluid circuit of Figure 1, when a driver is depressing a brake pedal of a vehicle,
Figure 4 is the brake fluid circuit of Figure 1, when a driver releases the brake pedal,
Figure 5 is the brake fluid circuit of Figure 1, showing a path that the brake fluid takes when the pressure of the fluid has decayed to a pre-determined value,
Figure 6 is the brake fluid circuit of Figure 1, when a " knock-off" event occurs,
Figure 7 is a schematic cross section of another brake fluid valve assembly in accordance with a second embodiment of the invention,
Figure 8 is a schematic view of a brake fluid valve assembly in accordance with a third embodiment of the invention, and
Figure 9 is a schematic view of another brake fluid valve assembly in accordance with a fourth embodiment of the invention.

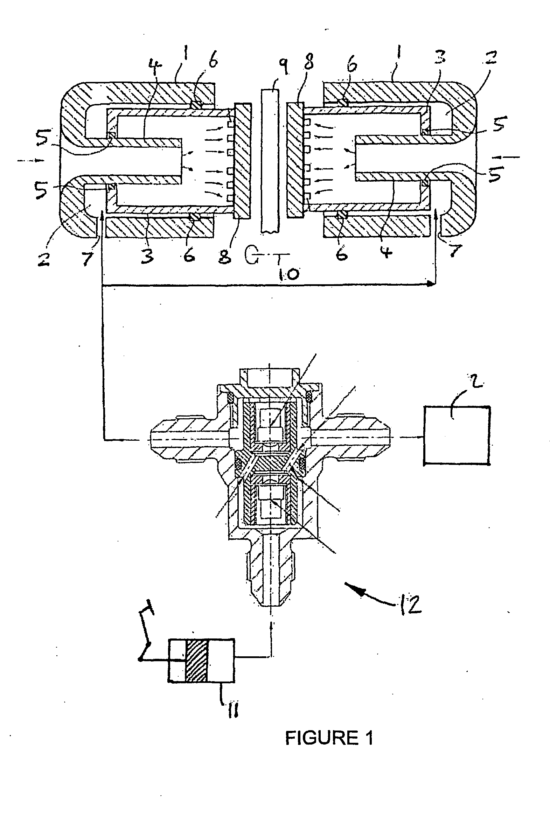

Referring to Figure 1, a standard brake fluid circuit comprises a brake caliper 1, a master cylinder 11, actuable by a brake pedal, and a brake fluid line therebetween, flow of brake fluid being governed by a suitable valve assembly arranged along the brake fluid line.

The brake caliper 1 straddles part of a brake disc 9. The brake caliper 1 defines a plurality of cylindrical bores 2 and each bore 2 houses a cylindrical piston 3. Chimney-like flow through devices 4, extend from the base of each piston bore 2, parallel to the wall of the bore, and continue through the base of the associated piston 3. Seals 5 are arranged between each flow through device 4 and the base of each piston 3. Further seals 6 are arranged between an open end of each bore 2 and a free end of the associated piston 3. The caliper 1 comprises inlets 7 which allow brake fluid to enter the bores 2 between the caliper 1 and the associated piston 3. Each piston 3 acts on a brake pad 8, which is arranged to move into contact with a brake disc 9 which moves about an axis of rotation 10 corresponding to the centre of a vehicle wheel (not shown).

The master cylinder 11, actuated by a brake pedal, moves a body of brake fluid, and thereby controls the pressure of the brake fluid flowing through the inlets 7 into the bores 2 of the calipers 1 and hence the braking force applied to the discs 9. '

Still referring to Figure 1, and in accordance with the invention, a brake fluid valve assembly 12 is arranged between the master cylinder 11 and the caliper 1. The brake fluid valve assembly 12 is in the form of a T-shaped capsule.

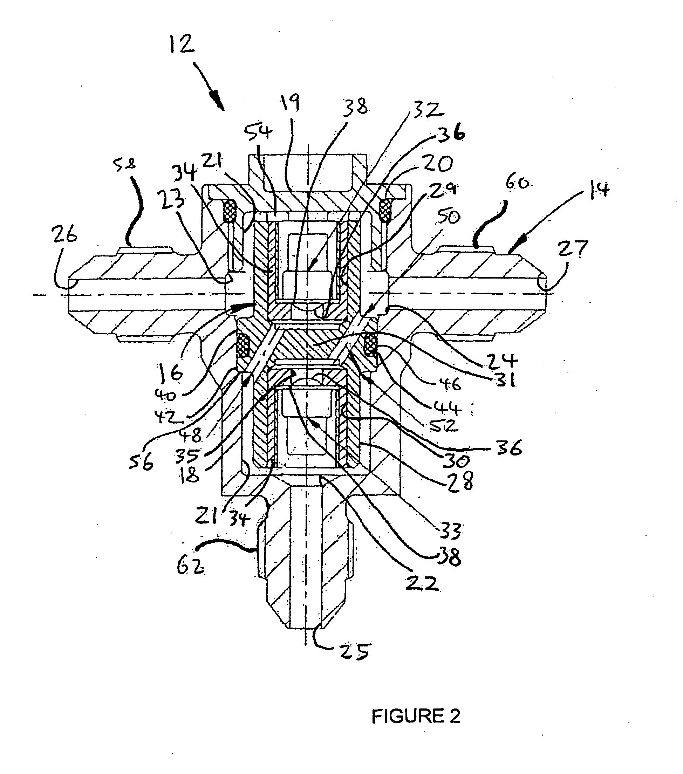

Referring to Figure 2, the brake fluid valve assembly 12 comprises a hollow housing 14 and a valve cartridge 16 therein.

The housing 14 is formed in two parts, a T-shaped housing part 18 and a cap part 19. The cap part 19 is secured to the housing part 18 by a screw threaded engagement. A sealing O-ring 20 is arranged between the housing part 18 and the cap part 19.

The T-shaped housing part 18 defines an inner chamber 21 which has a chamber inlet 22, a first chamber outlet 23 and a second chamber outlet 24. The chamber inlet 22, first chamber outlet 23 and second chamber outlet 24 are in fluid communication with respectively, a housing inlet 25, a first housing outlet 26 and a second housing outlet 27, through hollow branches of the T-shaped housing part 18.

The valve cartridge 16 comprises a tubular part 28, divided into two cup-like parts 29 and 30 by a solid central part 31. The tubular part 28 comprises a first (brake on) non-return valve 32 and a second (brake off) non-return valve 33. Each non-return valve 32, 33 comprises a cup-like housing 34, which corresponds in shape to the cup-like parts 29 and 30. Each cup-like housing 34 has an aperture 35 in its base and a ball 36 is spring biased against a seat 38 surrounding the aperture 35. The non-return valves 32, 33 are arranged in back-to-back manner in the cup-like parts 29 and 30.

An outer surface of the tubular part 28 has a first annular wall 40 and a second annular wall 42 and a recess 44 between them, half way along the length of the tubular part. A second sealing O-ring 46 is arranged in the recess 44.

The tubular part 28 comprises a first feed port 48, a second feed port, a third feed port and a fourth feed port (only the first of which is shown). The feed ports are arranged at 90 degree intervals.

The tubular part 28 also comprises a first return port 50, a second return port, a third return port, and a fourth return port, (only the first of which is shown). The return ports 50 are also spaced at 90 degree intervals and are out of phase by 45 degrees with the feed ports.

In accordance with the invention, the tubular part 28 also comprises a restrictor port 52 which extends from a point roughly two-thirds along the length of one (or more) of the return ports 50 to a point on the outer surface of the tubular part 28 on side of the second check valve and adjacent to the second seal 31. The restrictor port 52 is inclined at a similar angle to the axis of the tubular part 28 as the feed ports 34 and return ports 50, albeit in a different direction. The restrictor port 52 is out of phase by 45 degrees with the feed ports.

When the tubular part 28 is installed in chamber 21, the second annular wall 42 abuts against a shoulder 56, ensuring a clearance between the lower end of the tubular part 28 and the inner chamber 21 of the housing 14. The cap part 19 is then fitted onto the housing part 18. When the tubular part 28 is installed in the chamber 21, and the cap part 19 is fully secured onto the housing part 18, the tubular part abuts the cap part 19. A space defined by crenallations 54 on the end of the tubular part 28 allows fluid to pass from the first non-return valve 32 to the outlets 23 and 24. At the other end of the tubular part 28, a space between the end of tubular part and the housing part 18 allows fluid to pass from the inlet 22, via the feed ports 48, to the first non-return valve 32 and from the restrictor port 52 to the inlet 22. The second O-ring 46 seals between the tubular part 28 and the inner chamber 21 of the housing 14, thereby stopping fluid from passing directly from the inlet 22 to the outlets 23, 24 and vice versa. The return ports 50 allow fluid to flow from the chamber outlets 23, 24 to the second non-return valve 33. The restrictor port 52 exit is at the side of the seal 46 of the inlet 22, so that fluid can flow from the outlets 23, 24 to the inlet 22 via the restrictor port.

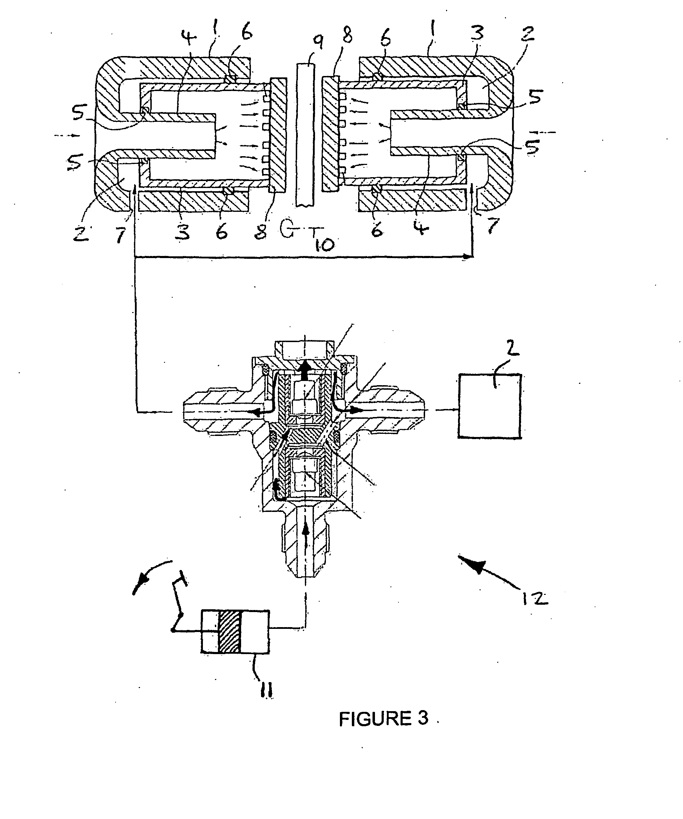

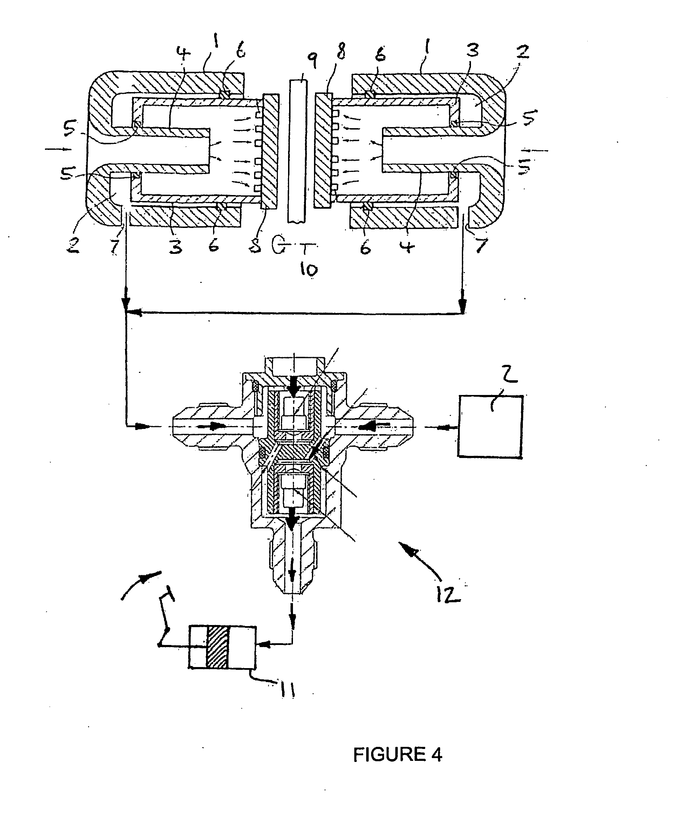

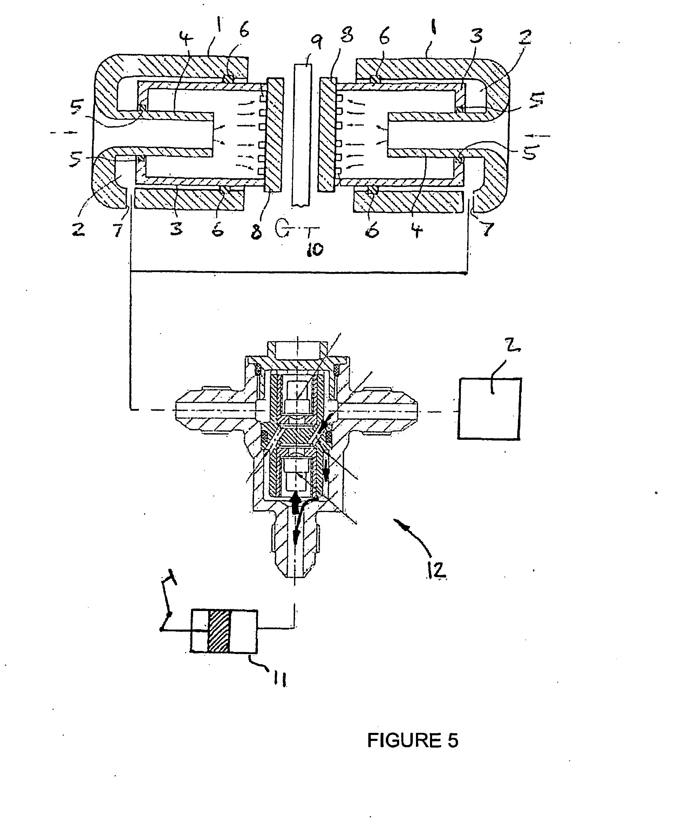

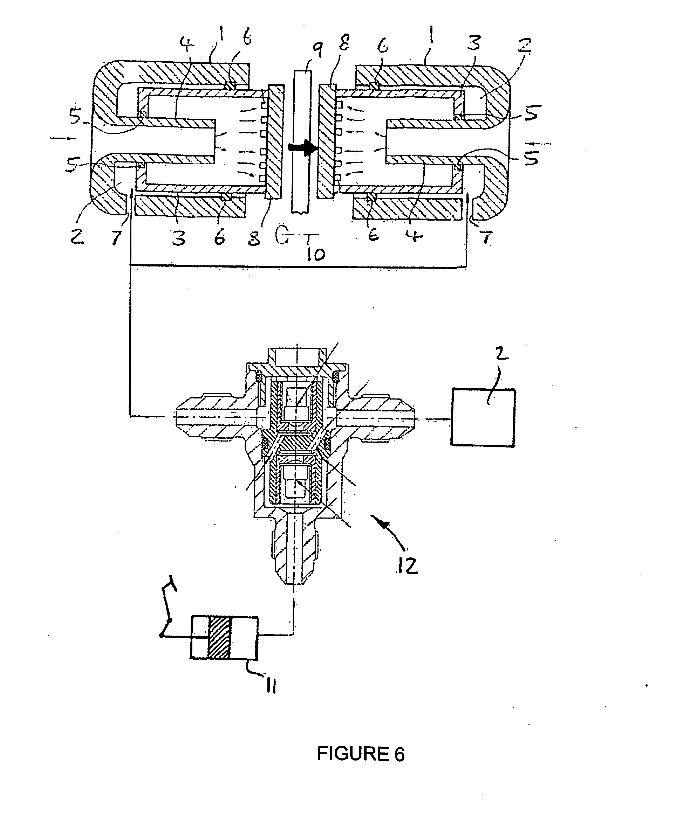

The assembly 12 shown in Figures 1 to 6 is installed in the feed line from the master cylinder 11 at screw threaded portions 58, 60 and 62, and is intended to replace the tee-piece normally fitted to supply each front caliper 1. It can be seen that one outlet supplies one brake caliper, including both of its sides by way of a cross caliper bridge, and the other outlet supplies another brake caliper (shown schematically by a box referenced 2), although variations to the arrangement shown are possible.

It will be noted that both check valves 32, 33 are contained within a capsule. Capsules are easily changed to enable fitment of valves with different pressure ratings to suit the requirements of different vehicles.

The assembly 12 allows fluid to flow freely from the master cylinder to the brake caliper, with restricted flow in the reverse direction when pressure has decayed to a predetermined value. When a knock-off event occurs, the restricted reverse flow prevents displacement of a large volume of fluid, or at least limits displacement.
1. As the driver presses the brake pedal, pressure and fluid volume are delivered from the master cylinder 11 through a number of feed ports 48, opening the brake on check valve 32 at a pre-determined pressure and feeding the bores 2 in the left hand and right hand calipers 1. The brake-off check valve 33 remains closed.
2. As the driver releases the pedal, pressure diminishes and fluid volume returns from the caliper 1 by the action of the caliper relaxing. The brake on check valve 32 closes and pressure and fluid volume pass through the return ports and the brake-off change over valve 33 opens at a pre-determined pressure, allowing the pressure to decay and fluid to be returned to the master cylinder 11.
3. When the pressure has decayed to a pre-determined value, e.g. two bar, the brake-off change over valve 33 closes. The remaining system pressure then dissipates to zero through the restrictor port 52 (or ports), resulting in no pressure being retained in the system.
4. When a knock-off event occurs, giving rise to a pressure of up to say 1.5 bar, the brake-off change over valve 33 remains closed and any volume of fluid being displaced must pass through the restrictor port 52 to reach the master cylinder 11. The restrictor port 52 is choked in these circumstances. Thus the reverse flow is restricted, preventing displacement of a large volume of fluid and limiting the severity of knock-off.

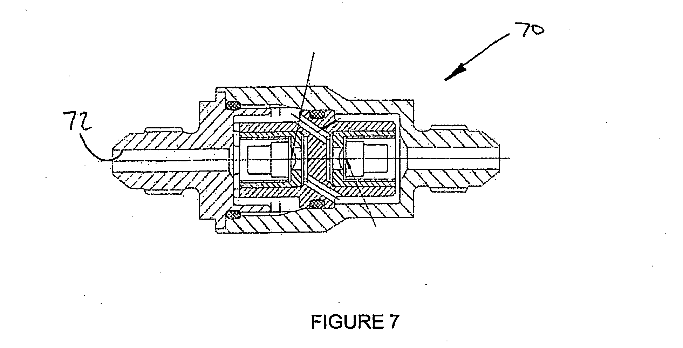

In another embodiment of the invention, the device could be mounted in-line as shown in Figure 7. Referring to Figure 7, in another embodiment of the invention a brake fluid valve assembly 70 has a different type of housing. In particular, the T-shaped housing part is replaced by a cup-like housing part. A similar tubular part and check valve arrangement is arranged therein. Also, instead of the cap-like housing part, there is provided a cap with a bore 72. Therefore the brake fluid valve assembly in Figure 7 has a single inlet and a single outlet as opposed to the single inlet and dual outlet arrangement shown in the previous embodiment.

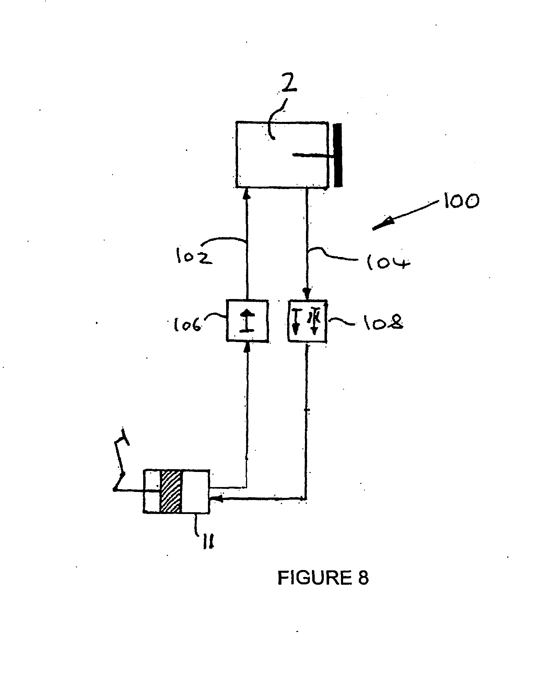

In yet another embodiment of the invention, shown in Figure 8, a brake fluid valve assembly 100 comprises a first brake fluid line 102 and a separate second brake fluid line 104 going respectively, from cylinder 11 to caliper 2 and from caliper 2 to cylinder 11. The first brake fluid line 102 comprises a first (brake on) non-return valve 106 and the second brake fluid line 104 comprises a second (brake off) non-return valve 108. The second (brake off) non-return valve 108 is like the second non-return valve 33, but with an integral return port (like 50) and restrictor port (like 52) thus enabling fluid to bypass the second (brake off) non-return valve 108.

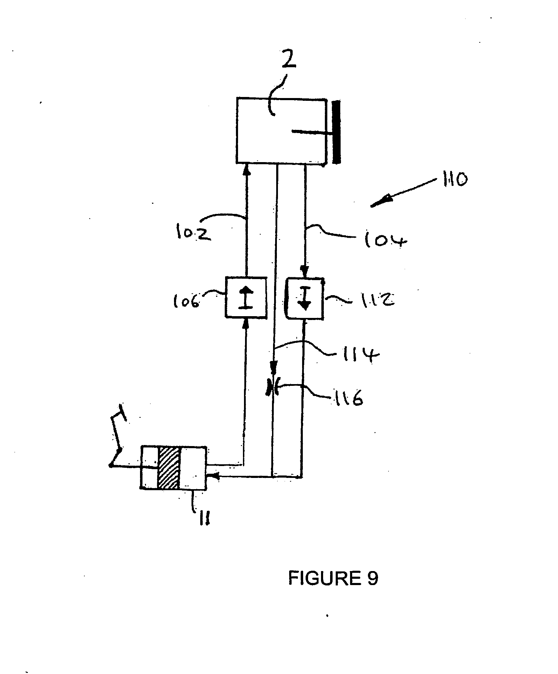

Referring to Figure 9, in a development of the embodiment shown in Figure 8, a brake fluid valve assembly 110 comprises a second (brake off) non-return valve 112 without the return port and restrictor port. Instead, the assembly 110 comprises a third brake fluid line 114 with a restrictor port 116, separate to the first brake fluid line 102 and the separate second brake fluid line 104.

The size of the restrictor port, and therefore speed of pressure dissipation, could be adjusted by the inclusion of a needle valve. The needle valve allows tuning of the maximum fluid flow rate through the restrictor port. In that way, the assembly 12 can be adjusted prior to installation for different track conditions where knock-off events of different magnitude might occur.

The restrictor port could be incorporated into the brake-off change over valve.

The device can be integral with a master cylinder, brake caliper or another valve assembly within the brake fluid system, such as ABS, ESP.

The device can be constructed from a variety of materials.

## Claims

1. A brake fluid valve assembly (12) comprising a first fluid flow path means (50) and a second fluid flow path means (52), each fluid flow path means (50, 52) for allowing brake fluid to flow in a direction from a caliper (1) towards a master cylinder (11), the second fluid flow path means (52) defining a minimum cross sectional area which is smaller than the minimum cross sectional area of the first fluid flow path means (50), the assembly being configured so that when brake fluid pressure is above a predetermined value, fluid can pass along the first fluid flow path means (50), and when brake fluid pressure drops below the predetermined value, the first fluid flow path means (50) is arranged to close and fluid can pass only along the second fluid flow path (52), so as to restrict the maximum possible flow rate of fluid in a direction from a caliper (1) towards a master cylinder (11).

2. A brake fluid valve assembly (12) according to Claim 1, wherein, when the brake fluid pressure is above the predetermined value, the second fluid flow path (52) means is part of the first fluid flow path means (50).

3. A brake fluid valve assembly (12) according to Claim 1 or 2, wherein the first fluid flow path means (50) comprises a plurality of paths for ducting fluid in parallel.

4. A brake fluid valve assembly (12) according to Claim 3, wherein one path of the first fluid flow path means (50) has a different minimum cross sectional area from another path of the first fluid flow path means (50).

5. A brake fluid valve assembly (12) according to Claim 3, wherein one path of the first fluid flow path means (50) has the same minimum cross sectional area as another path of the first fluid flow path means.

6. A brake fluid valve assembly (12) according to Claim 5, wherein all of the paths of the first fluid flow path means (50) have the same minimum cross sectional area

7. A brake fluid valve assembly (12) according to any of Claims 3 to 5, wherein at least one of the paths of the first fluid flow path (50) has a larger minimum cross sectional area than the minimum cross sectional area of the second fluid flow path (52).

8. A brake fluid valve assembly (12) according to any of Claims 3 to 5, wherein a plurality of the paths of the first fluid flow path (50) have a larger minimum cross sectional area than the minimum cross sectional area of the second fluid flow path (52).

9. A brake fluid valve assembly (12) according to any of Claims 3 to 5, wherein each of the paths of the first fluid flow path (50) have a larger minimum cross sectional area than the minimum cross sectional area of the second fluid flow path (52).

10. A brake fluid valve assembly (12) according to any of Claims 3 to 5, wherein at least one of the paths of the first fluid flow path (50) has a smaller minimum cross sectional area than the minimum cross sectional area of the second fluid flow path (52).

11. A brake fluid valve assembly (12) according to any of Claims 3 to 5, wherein a plurality of the paths of the first fluid flow path (50) have a smaller minimum cross sectional area than the minimum cross sectional area of the second fluid flow path (52).

12. A brake fluid valve assembly (12) according to any of Claims 3 to 5, wherein each of the paths of the first fluid flow path (50) have a smaller minimum cross sectional area than the minimum cross sectional area of the second fluid flow path (52).

13. A brake fluid valve assembly (12) according to any of Claims 3 to 5, wherein at least one of the paths of the first fluid flow path (50) has the same minimum cross sectional area as the minimum cross sectional area of the second fluid flow path (52).

14. A brake fluid valve assembly (12) according to any of Claims 3 to 5, wherein a plurality of the paths of the first fluid flow path (50) have the same minimum cross sectional area as the minimum cross sectional area of the second fluid flow path (52).

15. A brake fluid valve assembly (12) according to any of Claims 3 to 5, wherein each of the paths of the first fluid flow path (50) have the same minimum cross sectional area as the minimum cross sectional area of the second fluid flow path (52).

16. A brake fluid valve assembly (12) according to any preceding claim, wherein the second fluid flow path means (52) comprises a plurality of paths.

17. A brake fluid valve assembly (12) according to any of Claims 1 to 15, wherein the second fluid flow path means (52) comprises a single path.

18. A brake fluid valve assembly (12) according to any preceding claim, wherein, above the pre-determined pressure, the first fluid flow path means (50) is arranged so that at least part of the fluid flowing therethrough is unchoked.

19. A brake fluid valve assembly (12) according to any preceding claim, wherein, below the pre-determined pressure, the second fluid flow path (52) is arranged so that at least part of the fluid flowing therethrough is choked.

20. A brake fluid valve assembly (12) according to any preceding claim, wherein the assembly comprises a non-return valve (52) which defines the first fluid flow path (50).

21. A brake fluid valve assembly (12) according to Claim 20, wherein the non-return valve (38) also defines the second fluid flow path (52).

22. A brake fluid valve assembly (12) according to Claim 20, wherein the second fluid flow path (52) is arranged to allow fluid to by-pass the non-return valve (38) and the first fluid flow path.

23. A brake fluid valve assembly (12) according to any preceding claim, wherein the first fluid flow path (50) is arranged to close when brake fluid pressure is between 0 and 6 bar.

24. A brake fluid valve assembly (12) according to Claim 23, wherein the first fluid flow path (50) is arranged to close when brake fluid pressure drops below a pressure of about two bar.

25. A brake fluid valve assembly (12) according to any preceding claim, wherein the size of the minimum area of the second fluid flow path (52) is variable.

26. A brake fluid valve assembly (12) according to Claim 25, wherein the second fluid flow path (52) comprises a needle valve arranged to vary its size.

27. A brake fluid valve assembly (12) according to any preceding claim, wherein the second fluid flow path (52) comprises a restrictor port.

28. A brake fluid valve assembly (12) according to any of Claims 1 to 26, wherein the second fluid flow path (52) comprises a plurality of restrictor ports.

29. A brake fluid valve assembly (12) according to any preceding claim, wherein the first fluid flow path (50) comprises a plurality of return ports.

30. A brake fluid valve assembly (12) according to Claims 28 and 29, wherein at least one return port has a restrictor port associated with it.

31. A brake fluid valve assembly (12) according to Claims 28 and 29, wherein each return port has a restrictor port associated with it.

32. A brake fluid valve assembly (12) according to any preceding claim, when dependent on Claim 20, wherein the assembly comprises a second non-return valve for letting fluid flow from a master cylinder (11) towards a caliper to apply a brake.

33. A brake fluid valve assembly (12) according to Claim 32, wherein the assembly comprises a housing defining an inner chamber, the first non-return valve and the second non-return valve being arranged in the chamber, the housing defining an inlet and an outlet.

34. A brake fluid valve assembly (12) according to Claim 33, wherein the assembly comprises at least one restrictor port arranged between the outlet and the second non-return valve.

35. A brake fluid valve assembly (12) according to Claim 33, wherein the assembly comprises a single restrictor port arranged between the outlet and the second non-return valve.

36. A brake fluid valve assembly (12) according to Claim 33, 34, or 35, wherein the assembly comprises a return port arranged to allow fluid to flow from the outlet to the second non-return valve.

37. A brake fluid valve assembly (12) according to Claim 33, 34, or 35, wherein the assembly comprises a plurality of return ports arranged to allow fluid to flow from the outlet to the first non-return valve.

38. A brake fluid valve assembly (12) according to any of Claims 33 or 34 to 37, when dependent on Claim 33, wherein the assembly comprises a plurality of feed ports arranged to allow fluid to flow from the inlet to the second non-return valve.

39. A brake fluid valve assembly (12) according to any of Claims 33 to 37, wherein the assembly comprises a restrictor port being arranged between two feed ports.

40. A brake fluid valve assembly (12) according to Claim 39, wherein the assembly comprises a restrictor port arranged midway between two feed ports.

41. A brake fluid valve assembly (12) according to any preceding claim, wherein the brake fluid valve assembly is enclosed in a capsule.

42. A master cylinder (11) comprising a brake fluid valve assembly (12) according to any preceding claim.

43. A brake caliper (1) comprising a brake fluid valve assembly (12) according to any preceding claim.

44. A brake fluid control circuit comprising a brake fluid valve assembly (12) according to any preceding claim.

45. A vehicle comprising a brake fluid valve assembly (12) or master cylinder (11) or brake caliper (1) according to any preceding claim.

## Patentansprüche

1. Eine Ventilanordnung (12) für Bremsflüssigkeiten umfassend ein erstes Wegemittel (50) für den Fluidfluss und ein zweites Wegemittels (52) für den Fluidfluss, wobei jedes Wegemittel (50, 52) für den Fluidfluss so ausgebildet ist, dass es einer Bremsflüssigkeit ermöglicht wird, von einem Bremssattel (1) in Richtung eines Hauptbremszylinders (11) zu fließen und das das zweite Wegemittel (52) für den Fluidfluss durch eine Querschnittsfläche definiert ist, die kleiner als das Minimum der Querschnittsfläche des ersten Wegemittels (50) für den Fluidfluss ist, und die Anordnung so ausgebildet ist, dass wenn, der Druck der Bremsflüssigkeit über einen vorher bestimmten Wert liegt, das Fluid entlang des ersten Wegemittels (50) für den Fluidfluss fließen kann, und wenn der Druck der Bremsflüssigkeit unterhalb eines vorher bestimmten Wertes füllt, das erste Wegemittel (50) für den Fluidfluss schließbar ausgebildet ist, so dass das Fluid nur entlang des zweiten Weges (52) für den Fluidfluss fließen kann, so dass die maximal mögliche Durchflussrate des Fluids in eine Richtung weg von dem Bremssattel hin zu einem Hauptzylinder beschränkbar ist.

2. Eine Ventilanordnung (12) für Bremsflüssigkeiten gemäß Anspruch 1, wobei sobald der Druck der Bremsflüssigkeit oberhalb des vorher bestimmten Wertes liegt, und das zweite Wegemittel (52) für den Fluidfluss ein Teil des ersten Wegemittels (50) für den Fluidfluss ausbildet.

3. Eine Ventilanordnung (12) für Bremsflüssigkeiten gemäß Anspruch 1 oder 2, wobei das erste Wegemittel (50) für den Fluidfluss, für das parallele Leiten des Fluids, eine Vielzahl von Wegen umfasst.

4. Eine Ventilanordnung (12) für Bremsflüssigkeiten gemäß Anspruch 3, wobei ein Weg des Wegemittel (50) für den Fluidfluss ein anderes Minimum der Querschnittsfläche als ein anderer Weg von dem ersten Wegemittels (50) für den Fluidfluss aufweist.

5. Eine Ventilanordnung (12) für Bremsflüssigkeiten gemäß Anspruch 3, wobei ein Weg des ersten Wegenmittels (50) für den Fluidfluss das gleiche Minimum der Querschnittsfläche wie ein anderer Weg von dem ersten Wegemittel (50) für den Fluidfluss aufweist.

6. Eine Veiitilanordnung (12) für Bremsflüssigkeiten gemäß Anspruch 5, wobei alle Wege des ersten Wegemittels (50) für den Fluidfluss das gleiche Minimum der Querschnittsfläche aufweisen.

7. Eine Ventilanordnung (12) für Bremsflüssigkeiten gemäß einem der Ansprüche 3 bis 5, wobei wenigstens ein Weg des ersten Wegemittels (50) für den Fluidfluss ein größeres Minimum der Querschnittsfläche wie das zweite Wegemittels (52) für den Fluidfluss aufweist.

8. Eine Ventilanordnung (12) für Bremsflüssigkeiten gemäß einem der Ansprüche 3 bis 5, wobei eine Vielzahl von Wegen des ersten Wegemittels (50) für den Fluidfluss das gleiche Minimum der Querschnittsfläche wie das zweite Wegemittels (52) für den Fluidfluss aufweist.

9. Eine Ventilanordnung (12) für Bremsflüssigkeiten gemäß einem der Ansprüche 3 bis 5, wobei jeder der Wege in dem ersten Fluidflussweg (50) ein größeres Minimum der Querschnittsfläche als das gleiche Minimum der Querschnittsfläche des zweiten Wegemittels für den Fluidfluss aufweist.

10. Eine Ventilanordnung (12) für Bremsflüssigkeiten gemäß einem der Ansprüche 3 bis 5, wobei wenigstens einer der Wege in dem ersten Fluidflussweg (50) eine kleinere Querschnittsfläche als das gleiche Minimum der Querschnittsfläche des zweiten Fluidflussweges (52) aufweist.

11. Eine Ventilanordnung (12) für Bremsflüssigkeiten gemäß einem der Ansprüche 3 bis 5, wobei eine Vielzahl von Wegen in dem ersten Fluidflussweges (50) eine kleinere Querschnittsfläche als das gleiche Minimum der Querschnittsfläche des zweiten Fluidflussweges (52) aufweist.

12. Eine Ventilanordnung (12) für Bremsflüssigkeiten gemäß einem der Ansprüche 3 bis 5, wobei jeder Weg in dem ersten Fluidflussweges (50) eine kleinere Querschnittsfläche aufweist, als das gleiche Minimum der Querschnittsfläche des zweiten Fluidflussweges (52) aufweist.

13. Eine Ventilanordnung (12) für Bremsflüssigkeiten gemäß einem der Ansprüche 3 bis 5, wobei wenigstens ein Weg in dem ersten Fluidflussweg (50) die das gleiche Minimum der Querschnittsfläche wie die das Minimum der Querschnittsfläche des zweiten Fluidflussweges (52) aufweist.

14. Eine Ventilanordnung (12) für Bremsflüssigkeiten gemäß einem der Ansprüche 3 bis 5, wobei eine Vielzahl von Wegen in dem ersten Fluidflussweg (50) das gleiche Minimum der Querschnittsfläche wie das Minimum der Querschnittsfläche des zweiten Fluidflussweges (52) aufweist.

15. Eine Ventilanordnung (12) für Bremsflüssigkeiten gemäß einem der Ansprüche 3 bis 5, wobei jeder der Wege in dem Fluidflussweg (50) das gleiche Minimum der Querschnittsfläche wie das Minimum der Querschnittfläche des zweiten Fluidflussweges (52) aufweisen.

16. Eine Ventilanordnung (12) für Bremsflüssigkeiten gemäß einem der vorhergehenden Ansprüche, wobei das zweite Wegemittel (52) für den Fluidfluss eine Vielzahl von Wegen umfasst.

17. Eine Ventilanordnung (12) für Bremsflüssigkeiten gemäß einem der Ansprüche 1 bis 15, wobei die zweiten Wegemittels (52) für den Fluidfluss einen einzelnen Weg umfassen.

18. Eine Ventilanordnung (12) für Bremsflüssigkeiten gemäß einem der vorhergehenden Ansprüche, wobei oberhalb des vorherbestimmten Druckes das erste Wegemittel (50) für den Fluidfluss so ausgebildet ist, dass wenigstens ein Teil des Fluides ungedrosselt hindurch fließen kann.

19. Eine Ventilanordnung (12) für Bremsflüssigkeiten gemäß einem der vorhergehenden Ansprüche, wobei unterhalb des vorher bestimmten Druckes das zweite Wegemittel (52) für den Fluidfluss so ausgebildet ist, dass wenigstens einen Teil des Fluides ungedrosselt hindurch fließen kann.

20. Eine Ventilanordnung (12) für Bremsflüssigkeiten gemäß einem vorhergehenden der Ansprüche, wobei die Anordnung ein Sperrventil für den Rücklauf (32) umfasst, welches den ersten Fluidflussweg (50) festlegt.

21. Eine Ventilanordnung (12) für Bremsflüssigkeiten gemäß einem der vorhergehenden Ansprüche, wobei das Sperrventil für den Rücklauf (38) des Weiteren den zweiten Fluidflussweg (52) festlegt.

22. Eine Ventilanordnung (12) für Bremsflüssigkeiten gemäß Anspruche 20, wobei der zweite Fluidflussweg (52) so ausgebildet ist, dass es dem Fluid ermöglicht wird an dem Sperrventil für den Rücklauf (38) und dem ersten Fluidflussweg vorbei zufließen.

23. Eine Ventilanordnung (12) für Bremsflüssigkeiten gemäß einem der vorhergehenden Ansprüche, wobei der erste Fluidflussweg (50) so ausgebildet ist, dass dieser bei einem Bremsflüssigkeitsdruck von 0 bis 6 bar schließt.

24. Eine Ventilanordnung (12) für Bremsflüssigkeiten gemäß Anspruch 23, wobei der erste Fluidflussweg (50) so ausgebildet ist, dass dieser sich schließt, sobald der Druck der Bremsflüssigkeit unterhalb eines Druckes von unterhalb rund zwei bar absinkt.

25. Eine Ventilanordnung (12) für Bremsflüssigkeiten gemäß einem der vorhergehenden Ansprüche, wobei die Größe des Minimums der Querschnittsfläche des zweiten Fluidflussweges (52) variabel ist.

26. Eine Ventilanordnung (12) für Bremsflüssigkeiten gemäß Anspruch 25, wobei der zweite Fluidflussweg (52) ein Nadelventil zum Variieren der Größe umfast.

27. Eine Ventilanordnung (12) für Bremsflüssigkeiten gemäß einem der vorhergehenden Ansprüche, wobei der zweite Fluidflussweg (52) einen Drosselanschluss umfasst.

28. Eine Ventilanordnung (12) für Bremsflüssigkeiten gemäß einem der Ansprüche 1 bis 26, wobei der zweite Fluidflussweg (52) eine Vielzahl von Drosselanschlüssen umfasst.

29. Eine Ventilanordnung (12) für Bremsflüssigkeiten gemäß einem der vorhergehenden Ansprüche, wobei der erste Fluidflussweg (50) eine Vielzahl von Anschlüssen für den Rücklauf umfasst.

30. Eine Ventilanordnung (12) für Bremsflüssigkeiten nach den Ansprüche 28 bis 29, wobei wenigsten einen Anschluss für den Rücklauf mit einem Drosselanschluss verbunden ist.

31. Eine Ventilanordnung (12) für Bremsflüssigkeiten nach den Ansprüche 28 bis 29, wobei jeder Anschluss für den Rücklauf mit einem Drosselanschluss verbunden ist.

32. Eine Ventilanordnung (12) für Bremsflüssigkeiten gemäß einem der vorhergehenden Anspruche, wenn abhängig von Anspruch 20, wobei die Anordnung ein zweites Sperrventil für den Rücklauf umfasst, so dass das Fluid von einem Hauptzylinder in Richtung eines Bremssattels fließt, um die Bremse anzulegen.

33. Eine Ventilanordnung (12) für Bremsflüssigkeiten gemäß Anspruch 32, wobei die Anordnung ein Gehäuse umfasst, das eine innere Kammer ausbildet, das erste Sperrventil für den Rücklauf und das zweite Sperrventil für den Rücklauf in der Kammer angeordnet sind, und das Gehäuse einen Einlass und einen Auslass umschließt.

34. Eine Ventilanordnung (12) für Bremsflüssigkeiten gemäß Anspruch 33, wobei die Anordnung wenigsten einen Drosselanschluss umfasst, der zwischen dem Auslass und dem zweiten Sperrventil für den Rücklauf angeordnet ist.

35. Eine Ventilanordnung (12) für Bremsflüssigkeiten gemäß Anspruche 33, wobei die Anordnung einen einzelnen Drosselanschluss umfasst, der so ausgebildet ist, dass es dem Fluid erlaubt ist, von dem Auslass zu dem zweiten Sperrventil für den Rücklauf zu fließen.

36. Eine Ventilanordnung (12) für Bremsflüssigkeiten gemäß Anspruch 33, 34 oder 35, wobei die Anordnung einen Rücklaufanschluss umfasst, der so ausgebildet ist, dass es dem Fluid erlaubt ist von dem Auslass zu dem zweiten Sperrventil für den Rücklauf zu fließen.

37. Eine Ventilanordnung (12) für Bremsflüssigkeiten gemäß Anspruch 33, 34 oder 35, wobei die Anordnung eine Vielzahl von Anschlüssen für den Rücklauf umfasst, die so ausgebildet sind, dass es dem Fluid erlaubt ist, von dem Auslass zu dem ersten Sperrventil für den Rücklauf zu fließen.

38. Eine Ventilanordnung (12) für Bremsflüssigkeiten gemäß einem der Ansprüche 33 oder 34 bis 37, wenn abhängig von Anspruch 33, wobei die Anordnung eine Vielzahl von Anschlüssen für die Einspeisung umfasst, die so angeordnet sind, dass es dem Fluid erlaubt ist, von dem Einlass zu dem zweiten Sperrventil für den Rücklauf zu fließen.

39. Eine Ventilanordnung (12) für Bremsflüssigkeiten gemäß einem der Ansprüche 33 bis 37, wobei die Anordnung einen Drosselanschluss umfasst, der zwischen beiden Anschlüsse für die Einspeisung angeordnet ist.

40. Eine Ventilanordnung (12) für Bremsflüssigkeiten gemäß Anspruch 39, wobei die Anordnung einen Drosselanschluss umfasst, der in der Mitte zwischen den beiden Anschlüssen für die Einspeisung angeordnet ist.

41. Eine Ventilanordnung (12) für Bremsflüssigkei.ten gemäß einem der vorhergehenden Ansprüche, wobei die Ventilanordnung für Bremsflüssigkeiten von einer Kapsel umschlossen ist.

42. Einen Hauptzylinder (1.1), umfassend eine Ventilanordnung (12) für Bremsflüssigkeiten nach einem der vorhergehenden Ansprüche.

43. Einen Bremssattel (1), umfassend eine Ventilanordnung (12) für Bremsflüssigkeiten gemäß einem der vorhergehenden Ansprüche.

44. Ein Bremskontrollkreislauf, umfassend eine Ventilanordnung (12) für Bremsflüssigkeiten nach einem der vorhergehenden Ansprüche.

45. Ein Fahrzeug mit einer Ventilanordnung (12) für Bremsflüssigkeiten oder einem Hauptzylinder (11) oder einem Bremssattel (1) nach einem der vorhergehenden Ansprüche.

## Revendications

1. Ensemble soupape de liquide de frein (12) comprenant un premier moyen de passage d'écoulement de liquide (50) et un second moyen de passage d'écoulement de liquide (52), chaque moyen de passage d'écoulement de liquide (50, 52) étant destiné à permettre à un liquide de frein de s'écouler dans un sens à partir d'un étrier (1) vers un maître-cylindre (11), le second moyen de passage d'écoulement de liquide (52) définissant une superficie de section transversale minimum qui est inférieure à la superficie de section transversale minimum du premier moyen de passage d'écoulement de liquide (50), l'ensemble étant configuré de sorte que, lorsqu'une pression de liquide de frein est supérieure à une valeur prédéterminée, le liquide puisse passer le long du premier moyen de passage d'écoulement de liquide (50), et, lorsque la pression de liquide de frein est inférieure à la valeur prédéterminée, le premier moyen de passage d'écoulement de liquide (50) soit agencé pour se fermer et le liquide puisse passer seulement le long du second passage d'écoulement de liquide (52), afin de limiter le débit possible maximum de liquide dans un sens à partir d'un étrier (1) vers un maître-cylindre (11).

2. Ensemble soupape de liquide de frein (12) selon la revendication 1, dans lequel, lorsque la pression de liquide de frein est supérieure à la valeur prédéterminée, le second moyen de passage d'écoulement de liquide (52) fait partie du premier moyen de passage d'écoulement de liquide (50).

3. Ensemble soupape de liquide de frein (12) selon la revendication 1 ou 2, dans lequel le premier moyen de passage d'écoulement de liquide (50) comprend une pluralité de passages pour conduire le liquide en parallèle.

4. Ensemble soupape de liquide de frein (12) selon la revendication 3, dans lequel un passage du premier moyen de passage d'écoulement de liquide (50) possède une superficie de coupe transversale minimum différente d'un autre passage du premier moyen de passage d'écoulement de liquide (50).

5. Ensemble soupape de liquide de frein (12) selon la revendication 3, dans lequel un passage du premier moyen de passage d'écoulement de liquide (50) possède la même superficie de coupe transversale minimum qu'un autre passage du premier moyen de passage d'écoulement de liquide.

6. Ensemble soupape de liquide de frein (12) selon la revendication 5, dans lequel tous les passages du premier moyen de passage d'écoulement de liquide (50) possèdent la même superficie de coupe transversale minimum.

7. Ensemble soupape de liquide de frein (12) selon une quelconque des revendications 3 à 5, dans lequel au moins un des passages du premier passage d'écoulement de liquide (50) possède une superficie de coupe transversale minimum supérieure à la superficie de section transversale minimum du second passage d'écoulement de liquide (152).

8. Ensemble soupape de liquide de frein (12) selon une quelconque des revendications 3 à 5, dans lequel une pluralité des passages du premier passage d'écoulement de liquide (50) possèdent une superficie de coupe transversale minimum supérieure à la superficie de section transversale minimum du second passage d'écoulement de liquide (52).

9. Ensemble soupape de liquide de frein (12) selon une quelconque des revendications 3 à 5, dans lequel chacun des passages du premier passage d'écoulement de liquide (50) possède une superficie de coupe transversale minimum supérieure à la superficie de section transversale minimum du second passage d'écoulement de liquide (52).

10. Ensemble soupape de liquide de frein (12) selon une quelconque des revendications 3 à 5, dans lequel au moins un des passages du premier passage d'écoulement de liquide (50) possède une superficie de coupe transversale minimum inférieure à la superficie de section transversale minimum du second passage d'écoulement de liquide (52).

11. Ensemble soupape de liquide de frein (12) selon une quelconque des revendications 3 à 5, dans lequel une pluralité des passages du premier passage d'écoulement de liquide (50) possède une superficie de coupe transversale minimum inférieure à la superficie de section transversale minimum du second passage d'écoulement de liquide (52).

12. Ensemble soupape de liquide de frein (12) selon une quelconque des revendications 3 à 5, dans lequel chacun des passages du premier passage d'écoulement de liquide (50) possède une superficie de coupe transversale minimum inférieure à la superficie de section transversale minimum du second passage d'écoulement de liquide (52).

13. Ensemble soupape de liquide de frein (12) selon une quelconque des revendications 3 à 5, dans lequel au moins un des passages du premier passage d'écoulement de liquide (50) possède la même superficie de coupe transversale minimum que la superficie de section transversale minimum du second passage d'écoulement de liquide (52).

14. Ensemble soupape de liquide de frein (12) selon une quelconque des revendications 3 à 5, dans lequel une pluralité des passages du premier passage d'écoulement de liquide (50) possède la même superficie de coupe transversale minimum que la superficie de section transversale minimum du second passage d'écoulement de liquide (52).

15. Ensemble soupape de liquide de frein (12) selon une quelconque des revendications 3 à 5, dans lequel chacun des passages du premier passage d'écoulement de liquide (50) possède la même superficie de coupe transversale minimum que la superficie de section transversale minimum du second passage d'écoulement de liquide (52).

16. Ensemble soupape de liquide de frein (12) selon une quelconque revendication précédente, dans lequel le second moyen de passage d'écoulement de liquide (52) comprend une pluralité de passages.

17. Ensemble soupape de liquide de frein (12) selon une quelconque des revendications 1 à 15, dans lequel le second moyen de passage d'écoulement de liquide (52) comprend un seul passage.

18. Ensemble soupape de liquide de frein (12) selon une quelconque revendication précédente, dans lequel, au-dessus de la pression prédéterminée, le premier moyen de passage d'écoulement de liquide (50) est agencé de sorte qu'au moins une partie du liquide s'écoulant à travers celui-ci ne soit pas étranglée.

19. Ensemble soupape de liquide de frein (12) selon une quelconque revendication précédente, dans lequel, en dessous de la pression prédéterminée, le second passage d'écoulement de liquide (52) est agencé de sorte qu'au moins une partie du liquide s'écoulant à travers celui-ci soit étranglée.

20. Ensemble soupape de liquide de frein (12) selon une quelconque revendication précédente, dans lequel l'ensemble comprend une soupape de non-retour (32) qui définit le premier passage d'écoulement de liquide (50).

21. Ensemble soupape de liquide de frein (12) selon la revendication 20, dans lequel la soupape de non-retour (38) définit également le second passage d'écoulement de liquide (52).

22. Ensemble soupape de liquide de frein (12) selon la revendication 20, dans lequel le second passage d'écoulement de liquide (52) est agencé pour permettre au liquide de contourner la soupape de non-retour (38) et le premier passage d'écoulement de liquide.

23. Ensemble soupape de liquide de frein (12) selon une quelconque revendication précédente, dans lequel le premier passage d'écoulement de liquide (50) est agencé pour se fermer lorsque la pression de liquide de frein est entre 0 et 6 bars.

24. Ensemble soupape de liquide de frein (12) selon la revendication 23, dans lequel le premier passage d'écoulement de liquide (50) est agencé pour se fermer lorsque la pression de liquide de frein est inférieure à une pression d'environ deux bars.

25. Ensemble soupape de liquide de frein (12) selon une quelconque revendication précédente, dans lequel la taille de la superficie minimum du second passage d'écoulement de liquide (52) est variable.

26. Ensemble soupape de liquide de frein (12) selon la revendication 25, dans lequel le second passage d'écoulement de liquide (52) comprend un pointeau agencé pour varier sa taille.

27. Ensemble soupape de liquide de frein (12) selon une quelconque revendication précédente, dans lequel le second passage d'écoulement de liquide (52) comprend un orifice de restriction.

28. Ensemble soupape de liquide de frein (12) selon une quelconque des revendications 1 à 26, dans lequel le second passage d'écoulement de liquide (52) comprend une pluralité d'orifices de restriction.

29. Ensemble soupape de liquide de frein (12) selon une quelconque revendication précédente, dans lequel le premier passage d'écoulement de liquide (50) comprend une pluralité d'orifices de retour.

30. Ensemble soupape de liquide de frein (12) selon les revendications 28 et 29, dans lequel au moins un orifice de retour possède un orifice de restriction associé à celui-ci.

31. Ensemble soupape de liquide de frein (12) selon les revendications 28 et 29, dans lequel chaque orifice de retour possède un orifice de restriction associé à celui-ci.

32. Ensemble soupape de liquide de frein (12) selon une quelconque revendication précédente, lorsqu'elle dépend de la revendication 20, dans lequel l'ensemble comprend une seconde soupape de non-retour pour laisser un liquide s'écouler à partir d'un maître-cylindre (11) vers un étrier pour appliquer un frein.

33. Ensemble soupape de liquide de frein (12) selon la revendication 32, dans lequel l'ensemble comprend un logement définissant une chambre intérieure, la première soupape de non-retour et la seconde soupape de non-retour étant agencées dans la chambre, le logement définissant une entrée et une sortie.

34. Ensemble soupape de liquide de frein (12) selon la revendication 33, dans lequel l'ensemble comprend au moins un orifice de restriction agencé entre la sortie et la seconde soupape de non-retour.

35. Ensemble soupape de liquide de frein (12) selon la revendication 33, dans lequel l'ensemble comprend un seule orifice de restriction agencé entre la sortie et la seconde soupape de non-retour.

36. Ensemble soupape de liquide de frein (12) selon la revendication 33, 34 ou 35, dans lequel l'ensemble comprend un orifice de retour agencé pour permettre au liquide de s'écouler de la sortie à la seconde soupape de non-retour.

37. Ensemble soupape de liquide de frein (12) selon la revendication 33, 34 ou 35, dans lequel l'ensemble comprend une pluralité d'orifices de retour agencés pour permettre au liquide de s'écouler de la sortie à la première soupape de non-retour.

38. Ensemble soupape de liquide de frein (12) selon une quelconque des revendications 33 ou 34 à 37, lorsqu'elle dépend de la revendication 33, dans lequel l'ensemble comprend une pluralité d'orifices d'alimentation agencés pour permettre au liquide de s'écouler de l'entrée à la seconde soupape de non-retour.

39. Ensemble soupape de liquide de frein (12) selon une quelconque des revendications 33 à 37, dans lequel l'ensemble comprend un orifice de restriction agencé entre deux orifices d'alimentation.

40. Ensemble soupape de liquide de frein (12) selon la revendication 39, dans lequel l'ensemble comprend un orifice de restriction agencé à mi-chemin entre deux orifices d'alimentation.

41. Ensemble soupape de liquide de frein (12) selon une quelconque revendication précédente, dans lequel l'ensemble soupape de liquide de frein est enfermé dans une capsule.

42. Maître-cylindre (11) comprenant un ensemble soupape de liquide de frein (12) selon une quelconque revendication précédente.

43. Étrier de frein (1) comprenant un ensemble soupape de liquide de frein (12) selon une quelconque revendication précédente.

44. Circuit de régulation de liquide de frein comprenant un ensemble soupape de liquide de frein (12) selon une quelconque revendication précédente.

45. Véhicule comprenant un ensemble soupape de liquide de frein (12) ou un maître-cylindre (11) ou un étrier de frein (1) selon une quelconque revendication précédente.
